# EUROPÄISCHE PATENTSCHRIFT

(11) **EP 0 647 926 B1**
(45) Veröffentlichungstag und Bekanntmachung des Hinweises auf die Patenterteilung: **02.12.1998**
(21) Anmeldenummer: 94115523.6
(22) Anmeldetag: 01.10.1994
(51) Int. Cl.: G07C 5/08, G01C 22/02

(54) **Einrichtung zum Nachweis von Störungen der Signalübertragung in Kraftfahrzeugen**
Device for detecting disturbances during signal transmission in motorcars
Dispositif pour détecter des perturbations pendant la transmission des signaux dans des véhicules à moteur

(30) Priorität: 06.10.1993 DE 4334036
(43) Veröffentlichungstag der Anmeldung: 12.04.1995
(73) Patentinhaber: Mannesmann VDO AG, 60326 Frankfurt (DE)
(72) Erfinder: Jauch, Günther Ing. grad, D-78054 Villingen-Schwenningen (DE); Rentrop, Klaus-Peter Ing. grad, D-78120 Furtwangen (DE); Korifidis, Georgios, Dipl.-Ing., D-78056 Villingen-Schwenningen (DE); Lange, Roland Dipl.-Ing., D-78086 Brigachtal (DE)

(56) Entgegenhaltungen:
- EP-A- 0 517 082
- DE-B- 2 458 894
- DE-C- 4 202 583

## Beschreibung

Die Erfindung betrifft eine Einrichtung zum Nachweis von Störungen der Signalübertragung in Kraftfahrzeugen, insbesondere bei der Signalübertragung zwischen einem Streckenmeßgerät, und dessen entfernt von diesem angeordneten zugehörigen Meßsignalgeber.

Signalübertragung innerhalb eines Kraftfahrzeuges ist häufig unter dem Aspekt der Fahrsicherheit des Fahrzeugs zu sehen. Sofern Funktionen der Bremsen, des Motors oder der Lenkung in direkter oder indirekter Weise von der Zuverlässigkeit beteiligter elektrischer Signalgabe- und - Auswertungs-Vorrichtungen abhängen, ist es neben einer besonders zuverlässig funktionierenden Signalübermittlung ebenfalls wichtig, daß deren Funktionsfähigkeit überprüft werden kann und auch das Auftreten von Störsignalen identifiziert werden kann. - Weitere Signale, die einer Fahrsicherheit im allgemeinen Sinne dienen sollen, sind zum Beispiel diejenigen, die einem Fahrtschreiber oder ähnlichen im Fahrzeug befindlichen Geräten zugeführt werden. Diese Einrichtungen dienen unter anderem dazu, Fahrzeuggeschwindigkeiten in Abhängigkeit von der Zeit zu registrieren, so daß eine absichtliche Überschreitung von Grenzgeschwindigkeiten auch im Nachhinein erkannt und geahndet werden kann. Aufgrund des starken Wettbewerbs im Transportgewerbe wird leider immer wieder versucht, die hierzu vorgesehenen Weg- beziehungsweise Geschwindigkeits-Signalgeber zu manipulieren und der vorgeschriebenen Aufzeichnungspflicht für Fahrdaten in betrügerischer Weise auszuweichen.

Es sind verschiedene Vorrichtungen und Methoden bekannt, um eine Manipulation an einem Signalgeber der genannten Art oder an einer Signalübermittlungseinrichtung erkennbar zu machen oder zumindest zu erschweren. Eine solche Vorrichtung wird dargestellt in der DE-PS 42 02 583 C1 . In dieser Patentschrift werden auch weitere bekannte Maßnahmen zur Erfassung von Manipulationen an Signalgabeeinrichtungen genannt, wobei jener Stand der Technik hier nicht näher wiederholt werden soll. Es leuchtet ein, daß eine wesentlich höhere Manipulationssicherheit der genannten Geräte nur mit hohem Aufwand und Kosten herbeigeführt werden kann und daher für Hersteller und Käufer solcher Geräte zumeist weniger interessant ist.

Aufgabe der Erfindung ist es daher, eine verbesserte Vorrichtung anzugeben, die zum einen die Qualität der Signalgabe eines Weg- bzw. Geschwindigkeitssensors in Kraftfahrzeugen bewerten kann und die zum anderen in der Lage ist, Manipulationen an solchen Sensoren oder den zugehörigen Signalübertragungseinrichtungen mit hoher Erfolgsquote zu detektieren und ggf. zu registrieren, dies alles mit reduziertem Kosten- und Herstellungsaufwand.

Diese Aufgabe wird durch die Merkmale des Anspruches 1 gelöst.

In einer spezifischen Ausführungsform der Erfindung weist die Versorgungs-/Empfangseinheit 20 folgende Grundbestandteile auf: einen Oszillator, der mit einer Frequenz aus einem Bereich von etwa 9 bis 200 kHz mit einer festen oder variablen (frequenzmodulierten) Frequenz schwingt; eine Mischstufe, welche auf einen relativ niederohmigen, kurzschlußfesten Ausgang eine Gleichspannung ausgibt, der eine Wechselspannung mit der Frequenz des Oszillators überlagert ist; sowie eine Mustererkennungsstufe mit einem Pegelanalysator für mindestens zwei Eingangspegel, einer Phasenwinkel-Erkennungsstufe und eine Nutzsignal-Regenerierungsstufe. Gleichzeitig weist der Signalgeber 10 einen Spannungsregler, eine Wechselspannungs-Filterstufe und eine Modulationsstufe auf und besitzt als aktiven Sensor vorzugsweise ein magnetogalvanisches Element in Form eines Hall-Sensors.

Die angegebene Lösung hat den Vorteil, daß zwischen Geber und Versorgungs-/Empfangseinheit nur ein einfaches Signalkabel mit maximal drei Einzelleitern erforderlich ist und trotzdem mit vergleichsweise geringem Aufwand folgende typische Störungs- bzw. Manipulations-Versuchs-Situationen mit hoher Zuverlässigkeit erkannt und registriert werden können:
- Unterbrechung eines Einzelleiters
- Kurzschluß des eigentlichen Signalleiters mit Versorgungsspannung oder Masse (GND),
- hoch- oder niederohmige Ankopplung einer Fremdwechselspannung
- Fehlfunktionen des Gebers

Diese und weitere Aspekte der Erfindung werden im einzelnen anhand der Zeichnung erläutert. Es zeigt:
- Fig. 1: ein Blockschaltbild der Konfiguration der erfindungsgemäßen Vorrichtung
- Fig. 2: eine Geberschaltung für die erfindungsgemäße Vorrichtung mit einem Spannungsregler, einem Hall-Sensor und einem Modulator
- Fig. 3: eine alternative Modulatorschaltung für eine Geberschaltung gemäß Fig. 2
- Fig. 4: eine erste Mischstufe zur Erzeugung einer speziellen Versorgungsspannung für den Geber
- Fig. 5: eine andere Mischstufe zur Erzeugung einer speziellen Versorgungsspannung für den Geber
- Fig. 6: eine Signalaufbereitungsschaltung mit Nutzsignal- und Störungsindikatorausgang
- Fig. 7: eine weitere Mischstufe zur Erzeugung einer speziellen Versorgungsspannung für den Geber
- Fig. 8: eine Oszillatorschaltung für die Erzeugung eines Wechselspannungssignals, mit dem eine Mischstufe angesteuert wird
- Fig. 9: eine weitere Geberschaltung incl. Modulator
- Fig. 10: eine weitere Modulatorschaltung

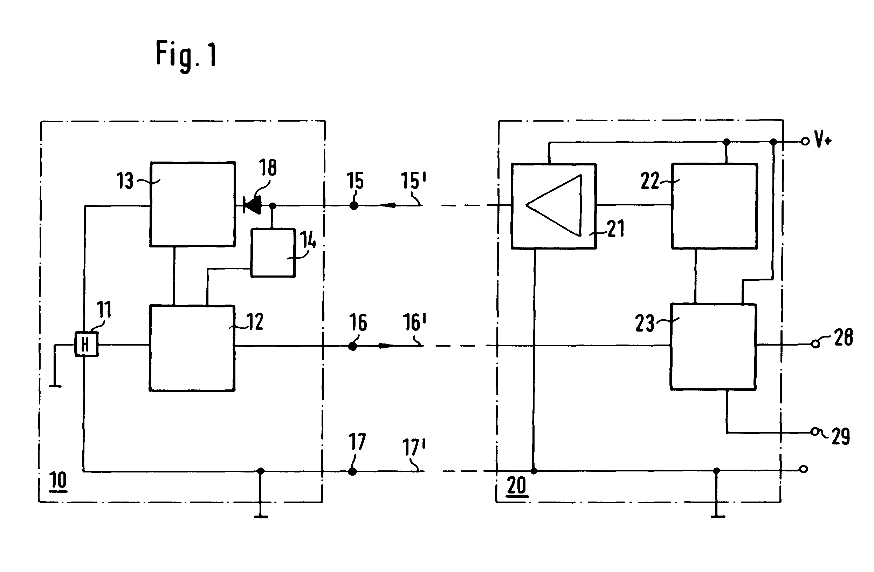

Das in Fig. 1 gezeigte Blockschaltbild gibt die logische Struktur und die Grundbestandteile der erfindungsgemäßen Anordnung wieder, welche physisch unterteilt ist in Geber 10, Signalstrecke 15', 16', 17', und Versorgungs- und Empfangseinheit 20.

Geber 10 kann in einem sehr allgemeinen Sinne als signalreflektierende Einrichtung aufgefaßt werden, welche mit einem Referenzsignal beaufschlagt wird, welches dann nach Maßgabe eines externen physikalischen Parameters in modulierter Form zurückgesendet wird. Es sei daher zunächst die prinzipielle Wirkungsweise der Versorgungs- und Empfangseinheit 20 erläutert, welche das genannte Referenzsignal erzeugt und auch ein zurückgesandtes Signal analysiert. Die Versorgungsspannung V+ speist einen Oszillator 22, eine Mischstufe 21 sowie eine Musterauswertungsschaltung 23, deren wesentliche Bestandteile eine Synchronisationsdetektor-Schaltung, eine Pegel-Erkennungsschaltung und eine Nutzsignalabtrennungsschaltung sind. Beim Oszillator 22 kann es sich um einen beliebigen Oszillator handeln, an dessen Ausgang jedoch eine oberwellenarme erste Signalspannung abgreifbar ist zur Ansteuerung der Mischstufe 21. Je nach Ausführung der Muster-Auswertungsschaltung 23 liefert der Oszillator 22 ein sinusförmiges oder digitales zweites Ausgangssignal, im folgenden Synchronisationssignal genannt, welches mit dem ersten Ausgangangssignal des Oszillators frequenzgleich ist und in phasenstarrer Relation steht, und im bevorzugten Anwendungsfall phasengleich an die Musterauswertungsschaltung 23 abgegeben wird.

Ein wesentlicher Aspekt der Erfindung besteht darin, zur Erkennung von Störungen oder Manipulationen an bzw. auf der Signalstrecke 15', 16', 17' die Versorgungsspannung für den Geber 10 mit einem wechselspannungsmäßigen Referenzsignal zu überlagern, dessen Anwesenheit, insbesondere in modulierter Form, durch den Empfangsteil der Versorgungs- und Empfangseinheit 20 detektiert wird, wobei Abweichungen von vordefinierten Signaleigenschaften als Nachweis einer Störung angesehen werden. Solche Störungen würden im Falle einer Manipulation an Geber 10 oder Signalstrecke 15', 16', 17' in praktisch jedem Falle hervorgerufen werden. Zur genannten Überlagerung der Versorgungsspannung für den Geber 10 mit einem Referenzsignal dient die Mischstufe 21, deren Schaltungsbestandteile an späterer Stelle erläutert werden. Es ist Aufgabe der Mischstufe 21, ein genügend leistungsstarkes Signal auf die Leitung 15' der Signalstrecke zu geben, um den Geber mit der benötigten Energie zu versorgen. Aus Gründen der elektromagnetischen Vertäglichkeit (EMV) ist es jedoch erforderlich, daß das von Mischstufe 21 abgegebene Signal möglichst oberwellenarm ist und sein Wechselspannungsanteil nicht zu unzulässiger elektromagnetischer Abstrahlung durch die Signalleitung 15' Anlaß gibt.

Das Spannungsgemisch aus Versorgungsspannung und Referenz-Signalspannung auf Leitung 15', welche gewöhnlich etwa einige Meter lang ist, aber natürlich auch länger oder kürzer sein kann, gelangt über Einkoppelpunkt 15 auf eine Filtereinheit 14, welche den Wechselspannungsanteil vom Gleichspannungsanteil abtrennt und vorwiegend den Wechselspannungsanteil auf den Modulator 12 weitergibt. Dieser hat zusätzlich einen Signaleingang für die Ausgangssignale eines Hall-Sensors oder Hall-ICs 11, welches auf die variierende Flußdichte B eines externen magnetischen Wechselfeldes reagiert, welches z.B. durch einen drehbaren Permanentmagneten 9 erzeugt wird. Sowohl Hall-IC 11 als auch Modulator 12 des Gebers 10 werden vorzugsweise mit einer geregelten Gleichspannung versorgt, welche dem Spannungsregler 13 entnommen wird, dem eine optionale Schutzdiode 18 zugeschaltet sein kann.

Die Ausgangssignale des Hall-Sensors 11 liegen in analoger oder digitaler Form vor und werden bei Bedarf durch eine interne Schaltung des Modulators 12 verstärkt. Sofern die Hall-Signale größer sind als ein vorgegebener Schwellenwert, veranlassen sie den Modulator, unmittelbar die Amplitude seiner Ausgangs-Wechselspannung zu verändern und diesen Amplitudenwert zunächst beizubehalten und bei Unterschreiten der Hallsignale unter den genannten Schwellenwert wieder ein Wechselspannungssignal mit der ursprünglichen Amplitude zu generieren usw. Zum Beispiel kann der Modulator eine Ausgangs-Wechselspannung mit großer Amplitude aufweisen, falls das Ausgangssignal des Hall-Sensors 11 größer ist als ein vorgegebener Pegel, und eine Ausgangs-Wechselspannung mit reduzierter Amplitude aufweisen, falls das Ausgangssignal des Hall-Sensors kleiner ist als der genannte vorgegebene Pegel. Gemäß der Erfindung hat dabei das Ausgangssignal des Modulators, welches an Koppelpunkt 16 abgegriffen wird, die gleiche Frequenz wie das Signal des Oszillators 22 bzw. wie die des Wechselspannungsanteils auf der Signalleitung 15'. Es wird jedoch bevorzugt in seiner Phasenlage relativ zu den genannten Signalen um einen festen Wert verschoben, wie z.B. durch eine Phasenumkehr bzw. -verschiebung von 180°. Dies hat den Vorteil, daß eine spätere Überprüfung des an Punkt 16 anliegenden Ausgangssignals mit größerer Sicherheit Auskunft darüber geben kann, ob ein beobachtetes Signal aufgrund eines Isolationsfehlers, einer Manipulation oder einer sonstigen Störung auf direktem oder nahezu direktem Wege elektrische Verbindung mit dem Ausgang der Mischstufe 21 oder dem Ankopplungspunkt 15 aufweist. Darüberhinaus ist es gemäß der Erfindung von Vorteil, auf der Signal-Rückführungsleitung 16' ein reines Wechselspannungssignal vorzusehen, um ein weiteres Unterscheidungsmerkmal in Hinblick auf das an Koppelpunkt 15 anliegende Signal zu definieren. Wie man erkennt, besitzt das an Koppelpunkt 16 anliegende Signal zum einen eine Information, die den Schalt-Status des Hall-Sensors repräsentiert (codiert durch die Amplitude des Signals ), zum anderen aber auch eine Information, die ein Hinweis auf die ordnungsgemäße Generierung des Modulator-Ausgangssignals ist (codiert durch die korrekte Phasenlage und Grundfrequenz des Signals).

Es versteht sich, daß die modulierende Frequenz des Hall-Sensors 11 kleiner sein sollte als die Frequenz des Oszillators 22 bzw. die Grundfrequenz des an Koppelpunkt 16 anliegenden Signals. In der Regel wird die Oszillatorfrequenz mindestens doppelt so hoch gewählt wie die höchste zu erwartende Frequenz des Hall-Sensors 11.

Das auf der Signal-Rückführungsleitung 16' anliegende Signal gelangt auf den Empfangsteil der Versorgungs- und Empfangseinheit 20. Dort werden die beiden gleichzeitig im Signal enthaltenen Informationen durch eine Muster-Auswertungsschaltung 23 separiert. Hierdurch gelingt es, das primäre, vom Hall-Sensor 11 stammende Nutz-Signal zu regenerieren und einer übergeordneten Auswerte- und Kontrolleinheit über einen Koppelpunkt 28 zuzuführen, und gleichzeitig ein Kontrollsignal zu generieren, welches an Koppelpunkt 29 anliegt und eine Störung oder einen Manipulationsversuch signalisiert. Auch dieses Signal wird zweckmäßigerweise der genannten Auswerteeinheit zugeführt oder, nach geeigneter Verstärkung, einer Kontrolleuchte oder gleichwertigem Signalgeber.

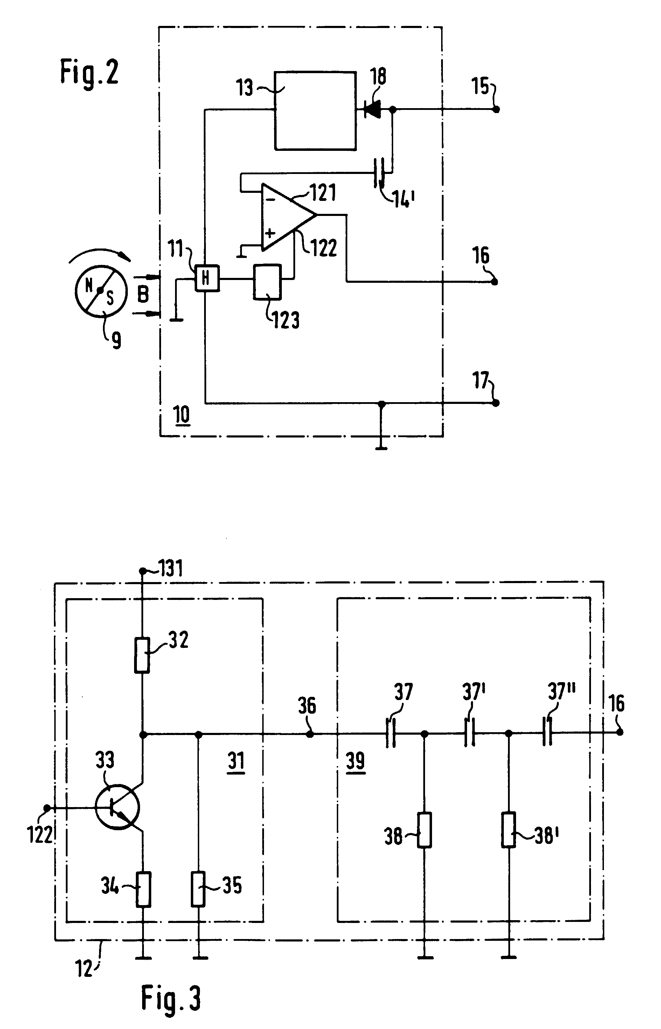

Fig. 2 zeigt eine Schaltung für einen Geber 10 der erfindungsgemäßen Vorrichtung, der sich durch eine vergleichsweise geringe Anzahl erforderlicher Bauteile für den Modulator 12 auszeichnet. Spannungsregler 13, Hall-Sensor 11 und Diode 18 entsprechen den in Fig. 1 gezeigten Schaltelementen. Filter- Kondensator 14' trennt das überlagerte Wechselspannungssignal von der an Übergabepunkt 15 anliegenden Versorgungsspannung ab und leitet es auf den invertierenden Eingang eines Operationsverstärkers 121, dessen nicht-invertierender Eingang auf Massepotential oder einem anderen geeigneten festen Bezugspotential liegt. Der Operationsverstärker 121 besitzt einen Eingang 122, mit dem seine Verstärkung gesteuert wird. Zu diesem Zweck kann zum Beispiel ein Verstärker vom Typ CA 3080 der Fa. RCA herangezogen werden. Der Eingang 122 wird über ein Anpass-Widerstandsnetzwerk 123 und ggf. einen Vorverstärker (nicht gezeigt) mit einem Ausgang des Hallsensors 11 verbunden. Auf diese Weise wird der Verstärkungsfaktor des Operationsverstärkers 121 nach Maßgabe des Ausgangssignals des Hall-Sensors 11 in definierter Weise zwischen einem oberen und einem unteren Wert variiert, beispielsweise zwischen einem Verstärkungsfaktor vom Betrag 2 und einem solchen vom Betrag 3,5. Da das über den Filterkondensator 14' abgekoppelte Signal auf den invertierenden und hochohmigen Eingang des Verstärkers 121 geschaltet ist, gibt Verstärker 121 an den Koppelpunkt 16 ein Ausgangssignal, dessen Phasenlage bezüglich des Eingangssignals ebenfalls invertiert, d.h. um 180° verschoben ist. Damit enthält das Ausgangssignal am Koppelpunkt 16 alle vorgesehenen Informationen, nämlich aufgrund seiner Amplitude eine Information über den Schaltstatus des Hall-Sensors 11 und aufgrund seiner Frequenz und Phasenlage eine Referenzinformation für einen nachfolgende Verifikationsvorgang. Ausgangssignale mit konstant hohem oder niedrigem Pegel sind damit ebensowenig gültig wie Wechselspannungs-Ausgangssignale mit fehlerhafter, d.h. zu großer oder zu kleiner Ausgangsamplitude oder mit fehlerhafter Phasenlage.

Fig. 3 zeigt ein weiteres Ausführungsbeispiel einer erfindungsgemäßen Schaltung für einen Modulator 12, welche sich ebenfalls durch eine vergleichsweise geringe Anzahl an Bauteilen auszeichnet.

Koppelpunkt 131 der Schaltung ist direkt mit der an Koppelpunkt 15 anliegenden Versorgungsspannung verbunden, während Eingang 122 in bereits beschriebener Weise mit dem Ausgang des Hall-Sensors 11 verbunden ist. Sofern der Hall-Sensor 11 als Hall-IC ausgeführt ist, liefert dieses ein genügend hohes Ausgangssignal, um den Transistor 33, der bevorzugt als Feldeffekttransistor ausgeführt ist, in den leitfähigen Zustand zu schalten oder, bei niedrigem Ausgangssignal des Hall-ICs, zu sperren. Je nach Schaltzustand des Transistors 33 erfährt das an Koppelpunkt 131 anliegende Signal eine unterschiedliche Spannungsteilung, und zwar bei gesperrtem (hochohmigen) Transistor 33 über Spannungsteilerwiderstände 32 und 35, bei durchgeschaltetem Transistor 33 über Widerstände 32 und den wirksam parallelgeschalteten Widerständen 34 und 35. Das auf diese Weise variierbar, aber definiert abgeschwächte Signal gelangt über Signalleitung 36 auf den Eingang einer Phasenschieber-Schaltung 39. In einer kostengünstigen Ausführung handelt es sich dabei um ein RC-Netzwerk bestehend aus Kondensatoren 37 und Widerständen 38. Eine ähnliche Ausführungsform sieht eine RLC-Netzwerk mit Induktivitäten 38' anstelle von Widerständen vor. Das an Koppelpunkt 16 abgegebene Ausgangssignal besitzt somit die gleiche Frequenz wie der Wechselspannungsanteil des an Koppelpunkt 131 eingespeisten Signals und steht in starrer Phasenbeziehung zu diesem.

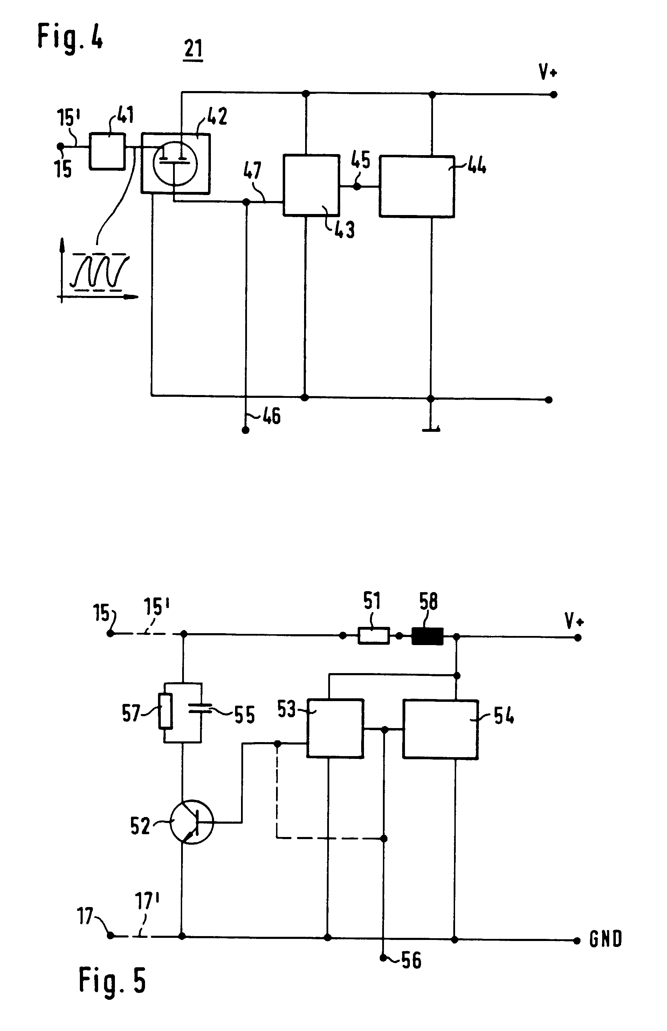

Fig. 4 zeigt eine erste Ausführungsform einer Mischstufe 21 zur Erzeugung einer kombinierten Versorgungs-/Referenzsignalspannung für Geber 10. Die gezeigte Schaltung weist einen Oszillator 44 auf, der nach bekanntem Stand der Technik aufgebaut ist und in einer bevorzugten Ausführungsform ein Sinussignal abgibt. Sofern es aus Kostengründen vorteilhaft ist, kann auch ein Oszillator mit rechteckförmigem Ausgangssignal vorgesehen werden, dessen Oberwellen dann jedoch vorzugsweise mittels einer Filterstufe 43 entfernt werden. Das verbleibende oberwellenarme Signal wird über Signalleitung 47 auf den Steuereingang einer steuerbaren Spannungsregeleinheit 42 geleitet. Gleichzeitig wird das am Eingang der Filterstufe 43 anliegende Signal auf die Synchronisationssignalleitung 46 gelegt. Bei der steuerbaren Spannungsregeleinheit 42 handelt es sich in einer Ausführungsform mit wenigen Schaltelementen um einen Feldeffekttransistor, dem ein Widerstandsnetzwerk vorgeschaltet ist. Der Leistungs-Eingang der steuerbaren Spannungsregeleinheit 42 ist mit der Versorgungsspannung V+ beschaltet, während der Leistungs-Ausgang mit einer Strombegrenzungsschaltung 41 herkömmlicher Bauweise verbunden ist und hierdurch die kombinierte Versorgungs-/Signalleitung 15' speist. Auf diese Weise wird mit vergleichsweise einfachen Mitteln dafür gesorgt, daß der Versorgungsgleichspannung für den Geber eine Wechselspannungskomponente von vorgegebener Frequenz überlagert wird. Die Strombegrenzungssschaltung 41 schützt vor Kurzschlüssen der Leitung 15' gegen Masse und ist bevorzugt bereits Bestandteil der Spannungsregeleinheit 42.

Fig. 5 zeigt eine zweite Ausführungsform einer Mischstufe zur Erzeugung einer kombinierten Versorgungs-/Referenzspannung für den Geber 10. In der Ausführungsform gemäß Fig. 5 ist ein Oszillator 54 vorhanden, der ebenfalls sinus- oder rechteckförmige Ausgangssignale liefert, welche auf eine Synchronisationssignalleitung 56 und über eine Oberwellensperre (Filter) 53 auf die Basis eines Shunt-Transistors 52 geleitet werden. Dieser ist mit seinem Emitter gegen Masse geschaltet und mit seinem Kollektor an eine Serien-Impedanz geschaltet, welche aus einer Parallelschaltung von Vorwiderstand 57 und Kondensator 55 besteht und welche mit ihrem zweiten Anschluß an einen Mischer-Widerstand 51 angeschlossen ist. Der Mischer-Widerstand 51 kann auch der ohmsche Anteil einer zusätzlichen, in Serie geschalteten Induktivität 58 sein, welche wie gezeigt mit ihrem zweiten Anschluß an die Versorgungsspannung V+ geschaltet ist. Mittels dieser Schaltungsanordnung ist es ebenfalls möglich, ein vergleichsweise stromstarkes DC-Signal auf die Leitung 15' zu geben, dem ein im wesentlichen sinusförmiges Wechselspannungssignal überlagert ist.

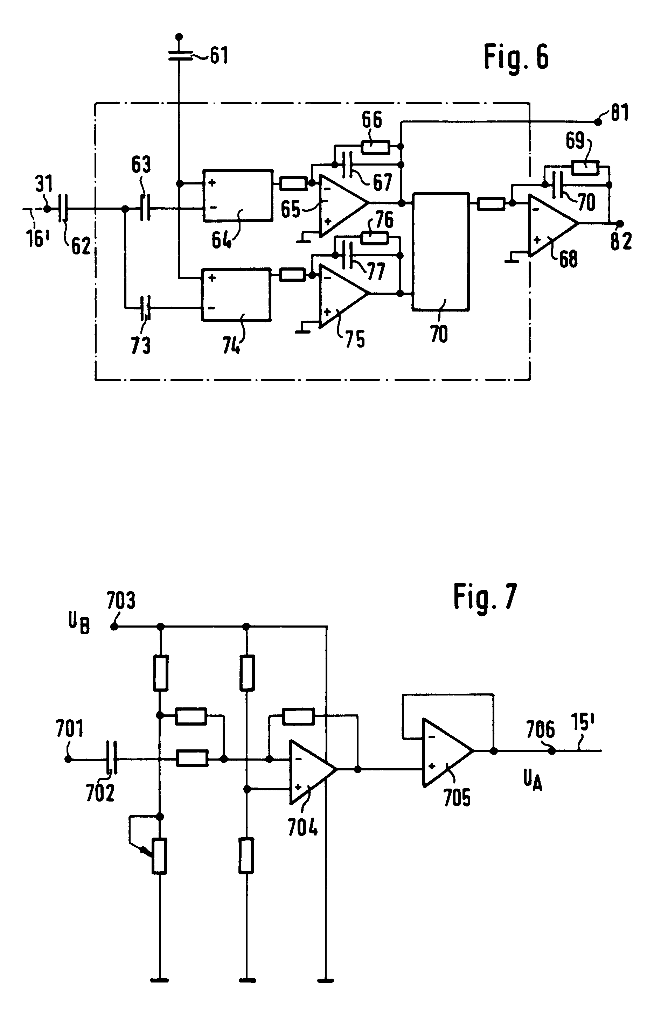

Fig. 6 zeigt ein Ausführungsbeispiel für eine Musterauswertungsschaltung 23, deren Funktionen in der Synchronisationsüberprüfung und in der Nutzsignalabtrennung bestehen. Dieser Schaltung 23 werden eingangsseitig über einen Koppelkondensator 61 das auf Signalleitung 46 bzw. 56 (Fig. 5) anliegende Synchronisationssignal sowie das Ausgangssignal des Modulators 12 über Leitung 16', Koppelpunkt 31 und Kondensator 62 zugeführt. Ausgangsseitig liefert die Musterauswertungsschaltung 23 an Ausgang bzw. Koppelpunkt 82 ein Indikatorsignal, welches eine vorhandene Störung nachweist, sowie an Koppelpunkt 81 ein Nutzsignal, welches die eigentlichen Geber-Signale repräsentiert.

Wesentlicher Bestandteil der Musterauswertungsschaltung 23 sind zwei Fensterkomparatoren 64, 74, denen unterschiedlich abschwächende Kondensatoren 63, 73 vorgeschaltet sind. Beide Fensterkomparatoren werden auf ihren nichtinvertierenden Eingängen mit dem Synchronisationssignal gespeist, welches über den optionalen Kondensator 61 zur Musterauswertungschaltung 23 gelangt.

Die Fensterkomparatoren 64, 74 liefern, sofern an ihren Eingängen annähernd gleichgroße Signale mit unterschiedlichem Vorzeichen anliegen, auf ihre Ausgänge ein logisches Signal mit hohem Pegel, anderenfalls ein solches mit niedrigem Pegel. Aufgrund der Signal-Phasenverschiebung und der im Normalfall ständig wechselnden Signalamplitude auf der Signal-Rückführungsleitung, wie es durch die Geberschaltung 10 herbeigeführt wird, werden beiden Komparatoren 64, 74 in zeitlich wechselnder Reihenfolge "passende" Signale für einen Vergleich zugeführt, d.h. solche, die vergleichbare Amplitude, gleiche Frequenz und entgegengesetzte Phasenlage aufweisen. Dies wird durch den betreffenden Komparator mit einem pulsierenden Ausgangssignal quittiert, welches ein Tastverhältnis von fast 100% aufweist und im Idealfall ständig logisch hohen Pegel aufweisen würde. Die Anpaßkondensatoren 63, 73 sind von unterschiedlicher Größe und reduzieren das an ihnen anliegende Signal in unterschiedlichem Maße. Auf diese Weise werden Signale bereitgestellt, die sich im logisch aktiven Zustand direkt mit dem Synchronisationssignal vergleichen lassen. Mittels dieser Schaltung wird der Schaltungsaufwand zur Erkennung eines gültigen Signals, welches einen aktuellen logisch aktiven Zustand repräsentiert, vergleichsweise gering gehalten.

Es versteht sich, daß die Anpaßkondenstoren 63, 73 genügend genau und alterungsstabil sein müssen und die Phasenverschiebung des zurückgeführten Signals durch Kondensatoren 61, 62, die im wesentlichen von gleicher Größe sind, kompensiert wird. Erzeugt der Geber 10 ein Ausgangssignal auf der Leitung 16', welches gegenüber dem Synchronisationssignal auf dem Koppelpunkt 46 oder 56 eine Phasenverschiebung von weniger als 180° aufweist, muß entweder Kondensator 61 oder 62 durch eine angleichende, phasenverschiebende RC-Kombination ersetzt werden.

Von beiden Komparatoren 64, 74 wird derjenige, der eine zu wenig ähnliche Signalkonstellation an seinen Eingängen vorfindet, ein pulsierendes Ausgangssignal mit einem Tastverhältnis nahe 0% liefern. Die Ausgangssignale beider Komparatoren werden jeweils auf einen Verstärker mit integrierenden Eigenschaften gegeben, welche erst dann ein aktives Ausgangssignal abgeben, wenn einige Signalperioden mit einem Tastverhältnis von etwa 90% registriert worden sind. Signale am Eingang der Verstärker mit integrativem Charakter 65, 75, die ein Tastverhältnis von weniger als ca. 80% aufweisen, ergeben kein aktives Ausgangssignal dieser Verstärker 65, 75. Der integrative Charakter der Verstärker 65, 75 wird durch Beschaltung mit Rückkopplungswiderständen 66, 76 und Rückkopplungskondensatoren 67, 77 herbeigeführt. Am Ausgang eines der Verstärker 65, 75 kann dann ein pulsierendes Signal abgegriffen werden, welches dem wechselnden Ausgangssignal des Hall-Sensors 11 entspricht. Die Ausgangssignale der Verstärker 65, 75 werden auf eine Exclusiv-Oder (XOR)-Stufe geleitet, die bei ungestörtem Betrieb der erfindungsgemäßen Schaltung alternierende, in antivalenter Form vorliegende Eingangssignale erfaßt und dementsprechend an ihrem invertierenden Ausgang im ungestörten Normalfall Signale mit niedrigem Tastverhältnis abgibt. Im Falle einer Störung wird jedoch ein Signal mit großem Tastverhältnis ausgegeben, welches über einen weiteren Verstärker 68 mit integrativem Verhalten zu einem Störmelde-Signal umgeformt wird und auf Koppelpunkt 82 geleitet wird.

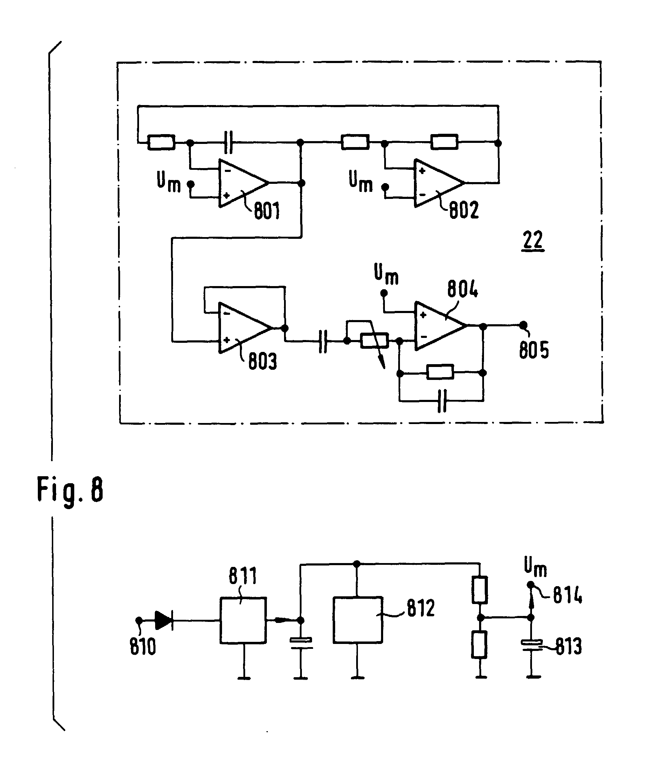

Fig. 7 zeigt eine weitere Mischstufe 21 zur Erzeugung einer speziellen Versorgungsspannung für den Geber 10. An Anschlußpunkt 703 liegt die Versorgungsspannung V+, welche zwei Operationsverstärker 704 und 705 und die gezeigten Widerstandsnetzwerke bestromt. An Speisepunkt 701 wird eine Signal-Wechselspannung eines Oszillators 22 eingespeist, für den ein Schaltbeispiel in Fig. 8 gezeigt ist. Diese Signalspannung wird über einen Kondensator 702, der Teil eines komplexwertigen Summierwiderstandes ist, auf den invertierenden Eingang eines Operationsverstärker 704 geschaltet, der in an sich bekannter Weise als Addierer arbeitet und zu einer Gleichspannung eine Wechselspannung in phasenverschobener, bevorzugt verstärkter Form hinzuaddiert. Das am Ausgang des Operationsverstärkers 704 anliegende Signalgemisch wird mittels des nachgeschalteten Operationsverstärkers 705, dessen Ausgang gegen Kurzschluß gegen Masse oder gegen Versorgungsspannung unempfindlich ist, gepuffert und über Auskoppelpunkt 706 auf die kombinierte Versorgungs-/Referenzspannungsleitung 15' gegeben. Die Ausgangsspannung des Verstärkers 705 ist größer als etwa 5 Volt, der Ausgangsstrom dieses Verstärkers beträgt maximal etwa 10 Milliampere.

Fig. 8 zeigt eine Oszillatorschaltung 22, die ein Wechselspannungssignal erzeugt, mit dem eine Mischstufe, wie z.B. in Fig. 7 gezeigt, angesteuert wird. Diese besteht aus Operationsverstärkern 801 bis 804, welche gemäß konventionellen RC-Oszillatorschaltungen angeordnet sind. Dem Fachmann ist es bekannt, wie eine solche Schaltung in Hinblick auf eine Frequenzmodulationseinrichtung abgwandelt werden kann. Mittels einer solchen, hier nicht näher beschriebenen Maßnahme ist es möglich, die Oszillatorfrequenz innerhalb eines gewissen Bereichs zeitlich zu verändern. Am Ausgang 805 des Verstärkers 804 kann die erforderliche Signalspannung als Sinussignal abgegriffen werden. Die für Verstärker 801, 802 und 804 erforderliche Vergleichsspannung Uₘ wird durch eine Versorgungsschaltung bereitgestellt, welche Spannungsregler 811 und Spannungskonstanter 812 aufweist und eine stabilisierte Vergleichsspannung an Ausgang 814 abgibt.

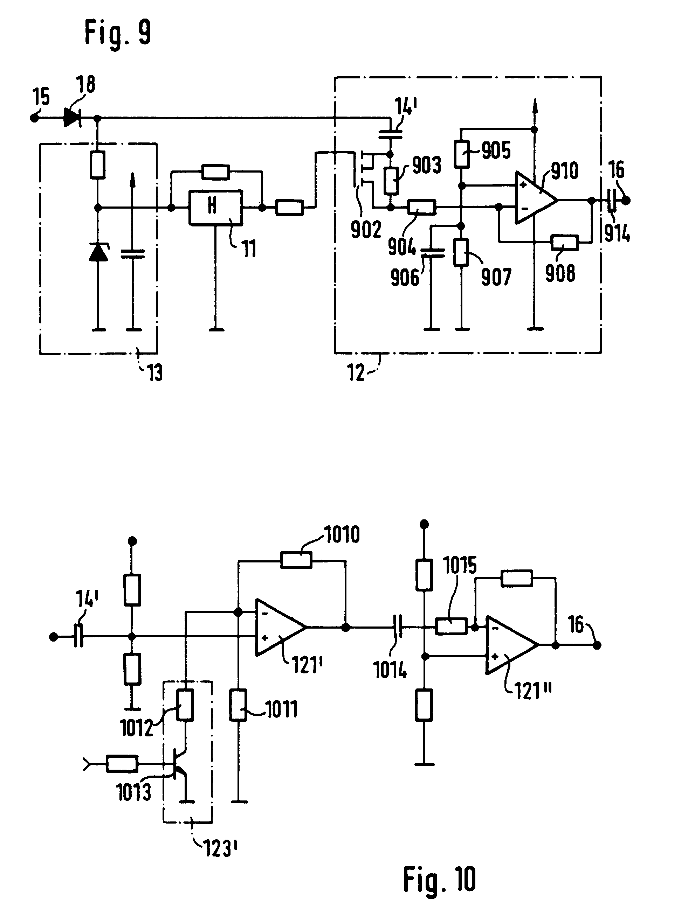

Fig. 9 zeigt eine weitere Geberschaltung 10 mit einem Regler 13, Hall-IC 11 und einer Modulatorstufe 12, welche ein amplitudenmoduliertes Ausgangssignal über Koppelkondensator 911 auf die Signal-Rückführungsleitung 16' ausgibt. Wesentlicher Bestandteil dieser Modulatorstufe ist der variable, komplexwertige Vorwiderstand des Operationsverstärkers 910, welcher aus der Serienschaltung von Koppelkondensator 14', Widerstand 904 und der variierbaren Widerstandskombination 903 und 902 besteht. Die Widerstandskombination weist einen Feldeffekttransistor 902 auf, dessen Gate direkt durch das Hall-IC 11 angesteuert wird und dessen im wesentlichen ohmscher Source-Drain-Widerstand dadurch zweistufig variiert wird. Parallel zu Source und Drain des Transistors 902 ist ein Festwiderstand 903 geschaltet, der den Maximalwiderstand der Widerstandskombination definiert. Bei angesteuertem, d.h. leitfähigem Transistor 902 überbrückt dieser im wesentlichen den Widerstand 903, der Minimalwiderstand der Widerstandskombination ist annähernd null Ohm. Durch die Variation des ohmschen Anteils des genannten komplexwertigen Vorwiderstandes wird die Verstärkung des Operationsverstärkers nach Maßgabe des Ausgangssignals des Hall-ICs geändert, und zwar durch das Widerstandsverhältnis von Rückkoppelwiderstand 908 zu ohmschen Anteil des Vorwiderstandes, definiert durch Transistor 902 und Widerstände 903 und 904. (Die zugrundeliegende Verstärkungseigenschaft des Operationsverstärkers 910 mittels dessen invertierenden und nicht-invertierendem Eingang ist an sich bekannt.) Auf diese Weise ist der Wechselspannungsanteil des an Koppelpunkt 16 anliegenden Ausgangssignals nach Maßgabe des Ausgangssignals des Hall-Sensors amplitudenmoduliert und weist eine definierte Phasenbeziehung zu dem Wechselspannungsanteil auf, der an Eingang 15 vorzufinden ist. - Zur Erzeugung eines überlagerten Gleichspannungspegels an Ausgang 16 wird der nicht-invertierende Eingang des Verstärkers 910 mit einer geglätteten Gleichspannung geeigneter Höhe beaufschlagt. Hierzu sind Widerstände 905 und 907 sowie Kondensator 906 vorgesehen.

Eine ähnlich wirkende Modulatorschaltung 12 zeigt Fig. 10. Das zu modulierende Signal wird über Koppelkondensator 14' von der kombinieren Versorgungs-/Referenzspannungsleitung abgekoppelt, mit einer geeigneten konstanten Vorspannung versehen und auf den nicht-invertierenden Eingang eines Operationsverstärkers 121' gegeben. Dessen (nicht invertierender) Verstärkungsfaktor wird, ähnlich wie im vorigen Beispiel, nach Maßgabe des Ausgangssignal des Hall-ICs 11 im wesentlichen zweistufig variiert. Hierzu wird in einer anderen Schaltungstechnik ebenfalls das Verhältnis von Rückkoppelwiderstand 1010 und Vorwiderstand verändert. Während der an den invertierenden Eingang geschaltete Rückkoppel-Widerstand unverändert bleibt, wird eine von dort gegen Masse geschaltete Widerstandskombination variabel gehalten. Diese Widerstandskombination besteht aus einem Widerstand 1011, dem eine Serienschaltung bestehend aus Widerstand 1012 und der Kollektor-Emitter-Strecke des Transistors 1013 parallel geschaltet ist. Die maximale bzw. minimale Verstärkung (oder Abschwächung) des Verstärkers 121' errechnet sich dann in an sich bekannter Weise, je nachdem ob der Transistor 1013 sehr hohe oder sehr niedrige Leitfähigkeit aufweist. Das am Ausgang des Verstärkers 121' anliegende Signal wird über Kondensator 1014 und Vorwiderstand 1015 auf den nachgeschalteten Verstärker 121'' geschaltet, der für eine invertierende Verstärkung, ggf. Abschwächung sorgt und der der amplitudenmodulierten Signal-Wechselspannung eine Gleichspannung in vorgesehener Höhe überlagert. Das auf diese Weise erzeugte Signalgemisch wird über Koppelpunkt 16 auf die Signal-Rückführungsleitung 16' gegeben und weist in Bezug auf das über Kondensator 14' eingespeiste Signal einen definierten Phasenversatz auf.

## Patentansprüche

1. Einrichtung zum Nachweis von Störungen der Signalübertragung in Kraftfahrzeugen, insbesondere bei der Signalübertragung zwischen einem Streckenmeßgerät und dessen entfernt von diesem angeordneten zugehörigen Meßsignalgeber (10), wobei das Streckenmeßgerät eine Versorgungs- und Empfangseinheit (20) für den Meßsignalgeber (10) aufweist, welcher mit der Versorgungs- und Empfangseinheit (20) über eine Versorgungs-/Referenzspannungsleitung (15'), einer Signal-Rückführungsleitung (16') und einem Bezugspotentialleiter (17') verbunden ist,
**dadurch gekennzeichnet**,
daß die Versorgungs- und Empfangseinheit (20) eine Mischstufe (21) zur Erzeugung eines wechselspannungsbehafteten Versorgungssignals für den Meßsignalgeber (10) und eine Musterauswertungsschaltung (23) aufweist, wobei die Musterauswertungsschaltung (23) ein logisch aktives Ausgangssignal erzeugt, sobald ein von der Signal-Rückführungsleitung (16') abgeleitetes Signal im Vergleich zu einem Synchronisationssignal eine im wesentlichen gleiche Amplitude und eine im wesentlichen gleiche Phasendifferenz aufweist.

2. Einrichtung nach Anspruch 1,
**dadurch gekennzeichnet**,
daß die Musterauswertungsschaltung (23) zwei Komparatoren (64, 74) zur Detektion variabler Spannungspegel von annähernd gleicher Größe aufweist.

3. Einrichtung nach Anspruch 1,
**dadurch gekennzeichnet**,
daß die Musterauswertungsschaltung (23) eine Stufe zur Überprüfung der Phasenlage eines Signals aufweist.

4. Einrichtung nach Anspruch 1,
**dadurch gekennzeichnet**,
daß die Mischstufe (21) eine kombinierte Versorgungs- und Referenzspannung erzeugt, deren Wechselspannungsanteil annähernd sinusförmig ist.

5. Einrichtung nach Anspruch 1,
**dadurch gekennzeichnet**,
daß die Phasendifferenz einen konstanten Wert von etwa 170° - 190° aufweist.

6. Einrichtung nach Anspruch 1,
**dadurch gekennzeichnet**,
daß die Frequenz eines der Versorgungs- und Empfangseinheit (20) zugeordneten Oszillators (22) mindestens doppelt so hoch ist wie die Frequenz des Meßsignalgebers (10).

7. Einrichtung nach Anspruch 1,
**dadurch gekennzeichnet**,
daß die Frequenz des Oszillators (22) als Funktion der Zeit verändert oder moduliert wird.

8. Einrichtung nach Anspruch 1,
**dadurch gekennzeichnet**,
daß der Meßsignalgeber (10) neben einer Modulationsstufe (12) einen Spannungsregler (13), einen Wechselspannungs-Filter (14) und einen Magnetfeldsensor in Form eines Hall-IC (11) umfaßt.

## Claims

1. Device for verifying disturbances of the signal transmission in motor vehicles, in particular in the signal transmission between a distance-measuring instrument and its associated measurement-signal transmitter (10) arranged at a distance from the latter, the distance-measuring instrument having a supplying and receiving unit (20) for the measurement-signal transmitter (10), which is connected to the supplying and receiving unit (20) via a supply/reference voltage line (15'), to a signal feedback line (16') and to a reference-potential conductor (17'), characterized in that the supplying and receiving unit (20) has a mixing stage (21) for generating an a.c. voltage supply signal for the measurement-signal transmitter (10) and a pattern-evaluating circuit (23), the pattern-evaluating circuit (23) generating a logically active output signal as soon as a signal derived from the signal feedback line (16') has a substantially equal amplitude and a substantially equal phase difference in comparison with a synchronization signal.

2. Device according to Claim 1, characterized in that the pattern-evaluating circuit (23) has two comparators (64, 74) for detecting variable voltage levels of approximately equal magnitude.

3. Device according to Claim 1, characterized in that the pattern-evaluating circuit (23) has a stage for checking the phase position of a signal.

4. Device according to Claim 1, characterized in that the mixing stage (21) generates a combined supply and reference voltage, the a.c. voltage component of which is approximately sinusoidal.

5. Device according to Claim 1, characterized in that the phase difference has a constant value of about 170° - 190°.

6. Device according to Claim 1, characterized in that the frequency of an oscillator (22) associated with the supplying and receiving unit (20) is at least twice as high as the frequency of the measurement-signal transmitter (10).

7. Device according to Claim 1, characterized in that the frequency of the oscillator (22) is altered or modulated as a function of time.

8. Device according to Claim 1, characterized in that the measurement-signal transmitter (10) includes, besides a modulation stage (12), a voltage regulator (13), an a.c. voltage filter (14) and a magnetic field sensor in the form of a Hall IC (11).

## Revendications

1. Dispositif pour la mise en évidence de perturbations de la transmission de signaux dans des véhicules automobiles, tout particulièrement lors de la transmission de signaux entre un dispositif de mesure de distances et son transmetteur de signaux de mesure (10) correspondant disposé à distance de ce dernier, ledit dispositif de mesure de distances présentant un ensemble d'alimentation et de réception (20) pour ledit transmetteur de signaux de mesure (10) qui est relié à l'ensemble d'alimentation et de réception (20) par l'intermédiaire d'une ligne de tension d'alimentation et de référence (15'), d'une ligne de retour de signal (16') et d'un conducteur de potentiel de référence (17'),
caractérisé par le fait
que ledit ensemble d'alimentation et de réception (20) présente un étage mélangeur (21) pour la génération d'un signal d'alimentation avec une tension alternative pour le transmetteur de signaux de mesure (10) et un circuit d'analyse d'échantillon (23), ledit circuit d'analyse d'échantillon (23) engendrant un signal de sortie logiquement actif dès qu'un signal dérivé de la ligne de retour de signal (16') présente, en comparaison d'un signal de synchronisation, une amplitude pour l'essentiel identique et une différence de phase pour l'essentiel identique.

2. Dispositif selon la revendication 1,
caractérisé par le fait
que le circuit d'analyse d'échantillon (23) présente deux comparateurs (64, 74) pour la détection de niveaux de tension variables d'une grandeur approximativement identique.

3. Dispositif selon la revendication 1,
caractérisé par le fait
que le dispositif d'analyse d'échantillon (23) présente un étage pour la vérification de la position de phase d'un signal.

4. Dispositif selon la revendication 1,
caractérisé par le fait
que l'étage mélangeur (21) engendre une tension combinée d'alimentation et de référence dont la composante alternative est approximativement sinusoïdale.

5. Dispositif selon la revendication 1,
caractérisé par le fait
que la différence de phase présente une valeur constante d'environ 170° - 190°.

6. Dispositif selon la revendication 1,
caractérisé par le fait
que la fréquence d'un oscillateur (22) associé audit ensemble d'alimentation et de réception (20) est au moins deux fois plus élevée que la fréquence du transmetteur de signal de mesure (10).

7. Dispositif selon la revendication 1,
caractérisé par le fait
que la fréquence de l'oscillateur (22) comme fonction du temps sera modifiée ou modulée.

8. Dispositif selon la revendication 1,
caractérisé par le fait
que le transmetteur de signal de mesure (10) comprend, en plus d'un étage modulateur (12), un régulateur de tension (13), un filtre de tension alternative (14) et un capteur à champ magnétique sous forme d'un IC Hall (11).
